# EUROPEAN PATENT APPLICATION

(11) **EP 1 810 772 A1**
(43) Date of publication of application: **25.07.2007**
(21) Application number: 07100445.1
(22) Date of filing: 12.01.2007
(51) Int. Cl.: B23K 9/16, B23K 9/29

(54) **Narrow groove gas shielding and related method**

(30) Priority: 18.01.2006 US 333416
(71) Applicant: GENERAL ELECTRIC COMPANY, Schenectady, NY 12345 (US)
(72) Inventor: GRYCKO, Lawrence Michael, Lockport, IL 60441 (US); NOLAN, John Francis, Cobleskill, NY 12043 (US); TOMKO, Andrew John, Glenville, NY 12302 (US)
(74) Representative: Bedford, Grant Richard

(57) **Abstract**

A shielding gas supply tube for delivering shielding gas to a welding arc at the bottom of a narrow groove includes at least one substantially hollow, elongated planar tube having a gas supply end and a gas discharge end; a pair of gas passageways within the tube, isolated from each other, extending between the supply end and the discharge end, and a pair of gas supply fittings at the supply end communicating separately with the pair of gas passageways.

## Description

This invention relates generally to turbine weld repair technology and specifically, to the application of shielding gas in narrow-groove welding.

The utilization of narrow and extremely narrow-groove welding has increased in the repair of critical steam turbine components, particularly because the process reduces residual stresses and distortion as well as repair time. The narrow groove itself, however, makes it difficult to deliver a shielding gas to the weld arc and puddle. In Gas Tungsten Arc Welding (GTAW), for example, the narrow groove inhibits the shielding gas which protects the tungsten electrode from oxidation at elevated welding temperatures. Consequently, welding in a narrow groove is subject to incomplete gas shielding and thus requires large quantities of shielding gas and many precise torch setups. All of these problems increase the cost and time required to perform a weld repair on a turbine component.

Typically, shielding gas has been delivered by two methods. One involves flooding the general area with large quantities of shielding gas, with the hope that sufficient gas will reach the weld arc and puddle and adequately shield the tungsten electrode. This method has proven very costly, however, and has required frequent torch setups. It is also vulnerable to the "chimney effect" common in narrow groove applications. The second method involves introducing shielding gas into the narrow groove in front and behind the weld with flexible tubes. This arrangement improves the resistance to the chimney effect, but still does not completely eliminate the problem. At the same time, this method also increases shielding gas usage and is very sensitive to precise positioning and flow rates.

One aspect of the present invention provides a relatively rigid shielding gas supply tube having a thin wedge profile with two internal discrete passageways. One passageway feeds and directs shielding gas through a first discharge opening to the weld puddle. The second passageway directs and feeds shielding gas through an elongated second discharge opening, oriented adjacent to and extending along the length of the welding electrode. An inlet connection at the upper end of the shielding gas supply tube is provided with threads for facilitating attachment to gas feeding hoses. The second elongated discharge opening is fitted with a very fine mesh screen that disburses the shielding gas slowly and uniformly along the electrode. The combination of these two shielding-gas-supply passages allows for two separate pressure and flow rates, as well as flexibility of design by the welding engineer in terms of setting specific parameters for implementing a deep, narrow groove weld. In the exemplary embodiment, two such shielding gas supply tubes are provided, one mounted on the front of the weld electrode path and the other mounted at the rear of the weld electrode path. Each has a similar profile, shaped such that they fit into the narrow groove and are able to be positioned closely adjacent the weld arc and puddle.

Accordingly, in one aspect, the present invention relates to a shielding gas supply tube for delivering shielding gas to a welding arc at the bottom of a narrow groove comprising at least one substantially hollow, elongated planar tube having a gas supply end and a gas discharge end; a pair of gas passageways within the tube, isolated from each other, extending between the supply end and the discharge end, and a pair of gas supply fittings at the supply end communicating separately with the pair of gas passageways.

In another aspect, the invention relates to welding apparatus comprising a welding electrode; a wire nozzle assembly; a pair of shielding gas supply tubes, one on either side of the welding electrode, each comprising a substantially hollow, planar tube having a gas supply end and a gas discharge end; and a pair of gas passageways within each tube, isolated from each other, extending between the supply end and the discharge end, and a pair of gas supply fittings at the supply end communicating separately with the pair of gas passageways.

In still another aspect, the invention relates to a method of supplying shielding gas to a welding electrode in a narrow groove comprising (a) arranging a first shielding gas supply tube adjacent a forward side of a welding electrode; (b) arranging a second shielding gas supply tube adjacent a trailing side of the welding electrode; and (c) supplying shielding gas through a pair of passageways in each of the first and second shielding gas supply tubes arranged to direct first streams of shielding gas along the welding, electrode, and second streams of gas to a weld arc adjacent a tip of the welding electrode.

The invention will now be described in detail in connection with the drawings identified below, in which:
FIGURE 1 is a partial perspective view of a narrow groove welding apparatus incorporating the shielding gas supply tubes in accordance with an exemplary embodiment of the invention;
FIGURE 2 is a side elevation of a component of one of the gas supply tubes shown in Figure 1;
FIGURE 3 is a left end elevation thereof;
FIGURE 4 is a right end elevation thereof;
FIGURE 5 is a plan view thereof; and
FIGURE 6 is a side elevation of a second cover component for the shielding gas supply tube shown in Figures 1-5.

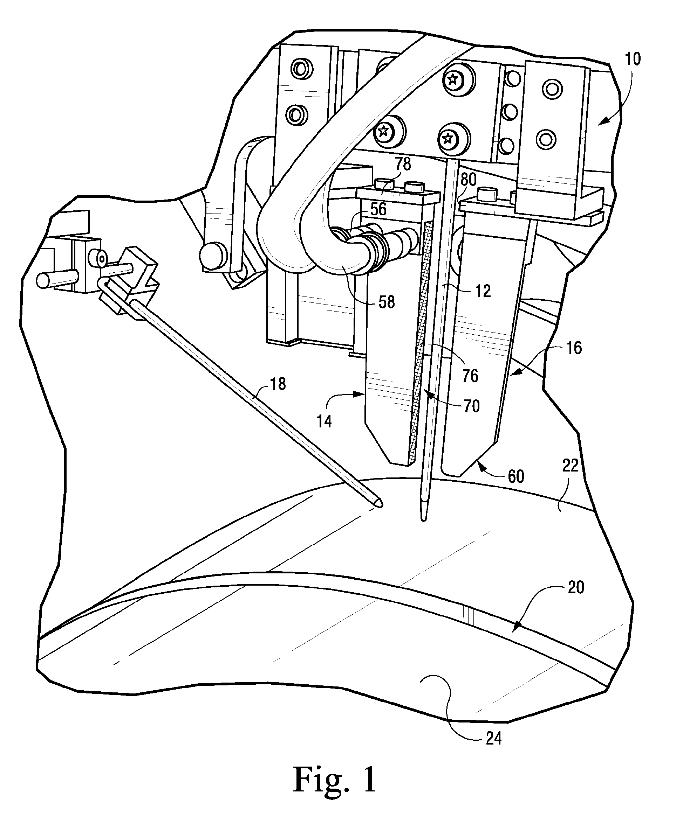

Referring to Figure 1, welding apparatus 10 includes a welding electrode 12 flanked by a pair of gas shielding gas supply wedges or tubes 14, 16 and an adjacent wire nozzle assembly 18. The apparatus is positioned for welding within a deep, narrow groove 20 between a pair of axially aligned, rotatable components 22, 24 to be welded.

The shielding gas supply wedges or tubes 14, 16 are mirror images of one another, with one tube 14 mounted at the front of the weld electrode path, and the other, 16, mounted at the rear of the weld electrode path. The shielding gas supply tubes 14, 16 are sized and shaped to fit into the narrow groove 20 with the welding electrode 12 as described further herein.

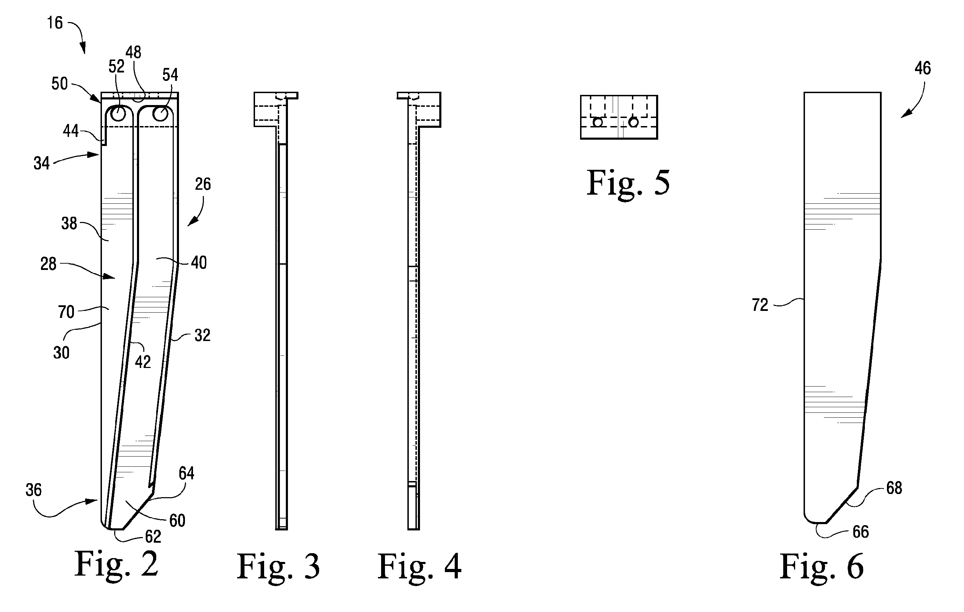

Figures 2-5 illustrate the shielding gas supply tube wedge 16 in detail. More specifically, the tube 16 is comprised of a pair of generally planar components. The main body portion 26 is a generally planar, elongated plate 28 having a first side edge 30 and a second raised side edge 32 extending between a gas supply or upper end 34 and a gas discharge or lower end 36. The main body 26 is machined to form a pair of interior passageways 38, 40. Passageway 40 is defined by outer raised edge 32, an internal rib 42 of similar height, and the passageway 40 is defined by the internal rib 42 and an outer, raised edge portion 44 that forms a thicker portion of the edge 30 at the gas supply end 34. The passageways are completed by a thin flat cover plate 46 (Figure 6) that overlies the main body 26, engaged along raised edge 32, internal rib 42, raised edge portion 44 and an upper shoulder 48. The latter partially defines a thicker gas supply or inlet connection 50 having a pair of side-by-side, threaded inlets 52, 54 in communication with passages 38, 40, respectively. Gas hoses 56, 58 (Figure 1) are connected at the threaded inlets 52, 54 and supply shielding gas to the respective passageways 38, 40.

It will be appreciated that when the flat plate 46 is secured in place over the body portion 26 by spot or tack welding, or other suitable means, a first discharge orifice 60 is formed at the lower end of passageway 40, along edges 62, 64 of body portion 26 and corresponding edges 66, 68 of the cover plate. The width of the passageway is defined by the height of edge 32 and rib 42. The passageway 40 and orifice 60 are arranged to deliver a stream of shielding gas to the weld arc adjacent the tip of the electrode.

A second discharge orifice 70 is formed substantially along the entire side edge 30 of main body portion 26 and corresponding edge 72 of cover plate 46. The width of the passage is also defined by the height of edge 32, rib 42 and the identical height of the raised edge portion 44. Orifice 70 may be covered by a fine mesh screen 76 or the like as best seen in Figure 1, to evenly distribute a stream of shielding gas in a direction transverse to the electrode 12, along substantially the entire length of the electrode. The screen 76 may be of micro-etched stainless steel construction, and spot or tack welded in place.

In one exemplary embodiment, the tubes 14, 16 are each between 5 and 7 inches in height; between .75 and 1.0 inches in length from edge 30 to edge 32 in the upper half of the tube (the lower half tapers at about a 6° angle to the lower tip); and about 0.90 in. in width. In the upper connector portion, the tube may have a width of about 0.335 in. and no more than 0.5 in.

With this configuration, shielding gas from both wedges or tubes 14, 16 is directed along the electrode 16 via opposed orifices 70 and to the weld arc and puddle via opposed orifices 60. This arrangement, where the shielding gas can be supplied (and separately metered) via separate passageways at different pressures and flows within each tube 14, 16, provides more control and balance on opposite sides of the welding electrode, weld arc and weld puddle. In addition, the wedge-shape of the tubes 14, 16 tends to block the aforementioned undesirable chimney effect. In addition, shielding gas consumption and the number of torch set-ups are decreased, while the life of the tungsten electrode is increased, all resulting in increased productivity.

Note also that because the tubes 14, 16 are metallic (stainless steel or Inconell, for example) and mounted directly on the torch apparatus, they are insulated from the welding apparatus by mica insulation plates 78, 80 (Figure 1).

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A shielding gas supply tube (16) for delivering shielding gas to a welding arc at the bottom of a narrow groove comprising:
at least one substantially hollow, elongated planar tube having a gas supply end (34) and a gas discharge end (36);
a pair of gas passageways (38,40) within said tube, isolated from each other, extending between said supply end and said discharge end, and a pair of gas supply fittings (52,54) at said supply end communicating separately with said pair of gas passageways.

2. The gas wedge of claim 1 wherein a lower portion of said tube tapers in one dimension toward said discharge end (36).

3. The gas wedge of claim 1 or claim 2 wherein a first discharge orifice (70) for one of said pair of passageways (38) is larger than a second discharge orifice (60) for the other of said pair of passageways (40).

4. The gas wedge of claim 3 wherein said second discharge orifice (60) is configured to supply shielding gas to a weld arc.

5. The gas wedge of claim 3 or claim 4 wherein said first discharge orifice (70) is configured to supply shielding gas along a substantial portion of an adjacent welding electrode (12).

6. The gas wedge of any preceding claim wherein said tube is comprised of a flat body portion (26) formed with one or more raised edges (32) and a flat cover portion (46) adapted to engage said raised edges.

7. The gas wedge of any preceding claim wherein said at least one tube (16) has an upper connector portion with a width of no greater than ½ inch.

8. The gas wedge of any one of claims 3 to 7 wherein said second discharge orifice (60) is covered by a mesh screen (76).

9. The gas wedge of any preceding claim wherein said tube (16) has a height of between 5 and 7 inches, a length of between 75 and 1.0 inch; and a width along said first and second passages of about 0.090 inch.

10. A method of supplying shielding gas to a welding electrode (12) in a narrow groove (20) comprising:
(a) arranging a first shielding gas supply tube (14) adjacent a forward side of a welding electrode;
(b) arranging a second shielding gas supply tube (16) adjacent a trailing side of the welding electrode; and
(c) supplying shielding gas through a pair of passageways (38,40) in each of said first and second shielding gas supply tubes arranged to direct first streams of shielding gas along said welding electrode (12), and second streams of gas to a weld arc adjacent a tip of the welding electrode.
